# EUROPEAN PATENT SPECIFICATION

(11) **EP 2 389 765 B1**
(45) Date of publication and mention of the grant of the patent: **13.01.2016**
(21) Application number: 10701925.9
(22) Date of filing: 14.01.2010
(51) Int. Cl.: H04N 13/00

(54) **TRANSFERRING OF 3D IMAGE DATA**
ÜBERTRAGUNG VON 3D-BILDDATEN
TRANSFERT DE DONNÉES D'IMAGES 3D

(30) Priority: 20.01.2009 EP 09150939; 20.01.2009 EP 09150947; 27.01.2009 EP 09151461
(43) Date of publication of application: 30.11.2011
(73) Proprietor: Koninklijke Philips N.V., 5656 AE Eindhoven (NL)
(72) Inventor: TALSTRA, Johan, C., NL-5656 AE Eindhoven (NL); VAN DER HEIJDEN, Gerardus, W., T., NL-5656 AE Eindhoven (NL); NEWTON, Philip, S., NL-5656 AE Eindhoven (NL)
(74) Representative: Kroeze, Johannes Antonius
(86) International application number: PCT/IB2010/050141
(87) International publication number: WO 2010/084439

(56) References cited:
- WO-A-2006/137000
- WO-A1-2009/113761
- WO-A2-2009/077969
- US-A1- 2003 128 273
- US-A1- 2007 165 304

## Description

### FIELD OF THE INVENTION

The invention relates to a method of transmitting a 3D display signal for transferring of three dimensional [3D] image data to a 3D display device, the 3D display signal comprising a sequence of frames constituting the 3D image data according to a 3D video transfer format
the sequence of frames comprising units, each unit corresponding to frames comprising video information video information intended to be composited and displayed as a 3D image;

The invention further relates to the above mentioned 3D source device, the 3D display signal and the 3D display device.

The invention relates to the field of transferring, via a high-speed digital interface, e.g. HDMI, three-dimensional image data, e.g. 3D video, for display on a 3D display device.

### BACKGROUND OF THE INVENTION

Devices for sourcing 2D video data are known, for example video players like DVD players or set top boxes which provide digital video signals. The source device is to be coupled to a display device like a TV set or monitor. Image data is transferred from the source device via a suitable interface, preferably a high-speed digital interface like HDMI. Currently 3D enhanced devices for sourcing three dimensional (3D) image data are being proposed. Similarly devices for display 3D image data are being proposed. For transferring the 3D video signals from the source device to the display device new high data rate digital interface standards are being developed, e.g. based on and compatible with the existing HDMI standard. Transferring 2D digital image signals to the display device usually involves sending the video pixel data frame by frame, which frames are to be displayed sequentially. Such frames may either represent video frames of a progressive video signal (full frames) or may represent video frames of an interlaced video signal (based on the well known line interlacing, one frame providing the odd lines and the next frame providing the even lines to be displayed sequentially).

The document US 4,979,033 describes an example of traditional video signal having an interlaced format. The traditional signal includes horizontal and vertical synchronization signals for displaying the lines and frames of the odd and even frames on a traditional television. A stereoscopic video system and method are proposed that allow synchronization of stereoscopic video with a display that uses shutter glasses. The odd and even frames are used to transfer respective left and right images of a stereoscopic video signal. The proposed 3D display device comprises a traditional envelope detector to detect the traditional odd/even frames but instead generates display signals for left and right LCD display units. In particular equalization pulses occurring during the vertical blanking interval, which differ for odd and even frames in the traditional interlaced analog video signal, are counted to identify the respective left or right field. The system uses this information to synchronize a pair of shutter glasses, such that the shutter glasses alternately open and close in sync with the stereo video.

There are many different ways in which stereo images may be formatted, called a 3D image format. Some formats are based on using a 2D channel to also carry the stereo information. For example the left and right view can be interlaced or can be placed side by side and above and under. These methods sacrifice resolution to carry the stereo information. Another option is to sacrifice color, this approach is called anaglyphic stereo.

New formats for transmitting 3D information to a display are being developed. MVD as being standardized in MPEG calls for transmitting {Video+Depth} for M views, to allow a larger view cone graphics overlays (e.g. menus or subtitles in BED-players or STBs) need to be transmitted to the display.

WO 2006/137000 discloses a method of combined exchange of image data and further data being related to the image data over an RGB link, wherein the RGB pixel values for a vide frame are replaced by image data being represented by a first two-dimensional matrix of image data elements and the further data being represented by a second two-dimensional matrix of further data elements, a header being also part of the image data being transferred.

US20030128273 discloses a stereoscopic video apparatus which inputs stereoscopic video data, converts the format of the input stereoscopic video data into a format suitable to output operation, and outputs the converted stereoscopic video data to a network

### SUMMARY OF THE INVENTION

It is an object of the invention to provide to a more flexible and reliable system for transferring of 3D video signals to a display device.

For this purpose, according to a first aspect of the invention, a method as described in the opening paragraph is defined in claim 1

For this purpose, according to a second aspect of the invention, a 3D source device for transferring of 3D image data to a 3D display device as described in the opening paragraph is defined in claim 7.

For this purpose, according to a further aspect of the invention, a 3D display device data as described in the opening paragraph is defined in claim 9, and a 3D display signal for transferring of 3D image data to a 3D display device is defined in claim 14.

The invention is also based on the following recognition. Unlike 2D video information, there are many possibilities for formatting 3D video data, for example stereoscopic, image + depth, possibly including occlusion and transparency, multiple view. Moreover it is envisioned that multiple 3D video data layers maybe transmitted over an interface for compositing before displaying. This multitude of options leads to many video format options, depending of the format of the data available at the source device and the 3D video format accepted by the display. Most of these format are characterized by a large volume of information, in a complex structure needs to be transmitted for each of the 3D image to be displayed. According to the invention, when the data is sent in units, and information about the units is available at in the 3D display signal, the transmission system is more flexible in handling various 3D data formats, as more data can be included in a unit. Modern high speed interfaces allow sending frames a frequency which is much higher than the actual frequency of the 3D images, usually 24 Hz as used by the cinematographic industry. By using units of frame, a higher volume of data, in a flexible format, for each 3D image can be sent over the interface.

In an embodiment, the group of multiplexing schemes further comprises at least one of field alternating multiplexing; line alternating multiplexing; side by side frame multiplexing, the side by side frame multiplexing indicating said number of frames being arranged side by side within said video data period; 2D and depth frame multiplexing; 2D, depth, graphics and graphics depth frame multiplexing.

In general, the transmission of 3D video data can be characterized by 3 parameters:
- pixel repeat rate
- number of frames in a unit of frames of a single 3D image
- the format: way of multiplexing the channels

In a preferred embodiment of the invention, information over all these parameters is included in the 3D transfer information. For maximum flexibility, according to the invention, these should be transmitted in three separate fields.

In an embodiment of the invention, HDMI is used as interface, and the 3D transfer information is sent over in AVI info frames and/or HDMI Vendor Specific info frames. In the most preferred embodiment, which allows for maximum flexibility, the 3D transfer information is sent in a separate info frame.

Further preferred embodiments of the method, 3D devices and signal according to the invention are given in the appended claims, disclosure of which is incorporated herein by reference.

### BRIEF DESCRIPTION OF THE DRAWINGS

These and other aspects of the invention will be apparent from and elucidated further with reference to the embodiments described by way of example in the following description and with reference to the accompanying drawings, in which
Figure 1 shows a system for transferring three dimensional (3D) image data;
Figure 2 shows an example of 3D image data;
Figure 3 shows playback device and display device combination;
Figure 4 shows schematically possible units of frames to be sent over the video interface for a 3D image data corresponding 2D+Stereo + DOT;
Figure 5 shows schematically further details of possible units of frames to be sent over the video interface for a 3D image data corresponding 2D+Stereo + DOT;
Figure 6 shows schematically the time output of frames over the video interface, for a 3D image data corresponding 2D+Stereo + DOT;
Figure 7 shows schematically possible units of frames arrangement for a stereo signal;
Figure 8 shows horizontal and vertical blanking and signaling for a • *D* + DOT format @ 1920 pixels;
Figure 9 shows horizontal and vertical blanking and signaling for a• D + DOT format 720 pixels sent as 1920progressive @30Hz;
Figure 10 shows a table of an AVI-info frame extended with a frame type synchronization indicator for stereo3D image data;
Figure 11 shows a Table of 3D video formats;
Figure 12 shows a frame synchronization signal, and
Figure 13 shows values for additional video layers.

In the Figures, elements which correspond to elements already described have the same reference numerals.

### DETAILED DESCRIPTION OF EMBODIMENTS

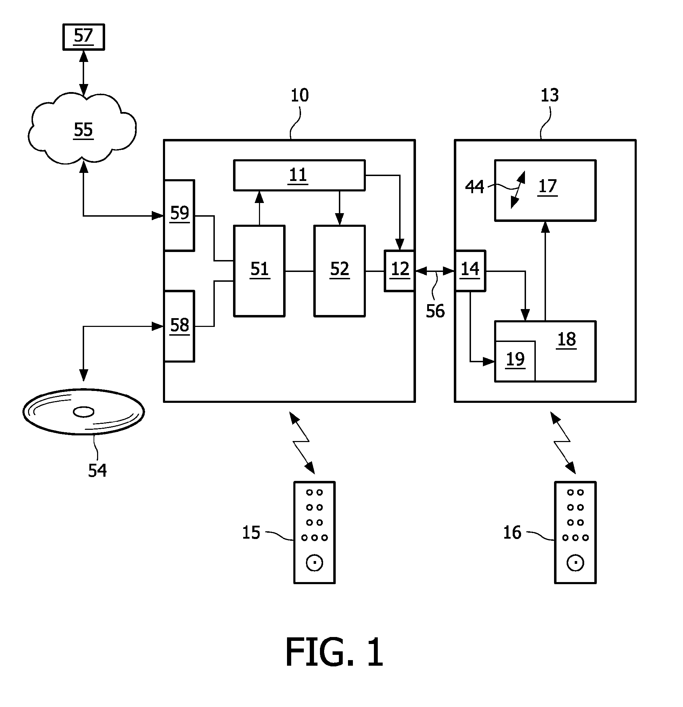

Figure 1 shows a system for transferring three dimensional (3D) image data, such as video, graphics or other visual information. A 3D source device 10 is coupled to a 3D display device 13 for transferring a 3D display signal 56. The 3D source device has an input unit 51 for receiving image information. For example the input unit device may include an optical disc unit 58 for retrieving various types of image information from an optical record carrier 54 like a DVD or BluRay disc. Alternatively, the input unit may include a network interface unit 59 for coupling to a network 55, for example the internet or a broadcast network, such device usually being called a set-top box. Image data may be retrieved from a remote media server 57. The source device may also be a satellite receiver, or a media server directly providing the display signals, i.e. any suitable device that outputs a 3D display signal to be directly coupled to a display unit.

The 3D source device has a processing unit 52 coupled to the input unit 51 for processing the image information for generating a 3D display signal 56 to be transferred via an output interface unit 12 to the display device. The processing unit 52 is arranged for generating the image data included in the 3D display signal 56 for display on the display device 13. The source device is provided with user control elements 15, for controlling display parameters of the image data, such as contrast or color parameter. The user control elements as such are well known, and may include a remote control unit having various buttons and/or cursor control functions to control the various functions of the 3D source device, such as playback and recording functions, and for setting said display parameters, e.g. via a graphical user interface and/or menus.

The source device has a transmit synchronization unit 11 for providing at least one frame type synchronization indicator in the 3D display signal, which indicator is included in the 3D display signal in the output interface unit 12, which is further arranged for transferring the 3D display signal with the image data and the frame type synchronization indicators from the source device to the display device as the 3D display signal 56. The 3D display signal comprises a sequence of frames , the frames organized in groups of frames, thereby constituting the 3D image data according to a 3D video transfer format, in which format the frames comprise at least two different frame types. Each frame has a data structure for representing a sequence of digital image pixel data, usually arranged as a sequence of horizontal lines of a number of pixels according to a predetermined resolution. Each frame type represents a partial 3D data structure. For example the 3D partial data structures in the frame types of the 3D video transfer format may be left and right images, or a 2D image and additional depth, and/or further 3D data such as occlusion or transparency information as discussed below. Note that the frame type may also be a combination frame type indicative of a combination of sub-frames of the above frame types, e.g. 4 sub-frames having a lower resolution located in a single full resolution frame. Also a number of multi-view images may be encoded in the video stream of frames to be simultaneously displayed.

The source device is adapted to including 3D transfer information comprising at least information about the number of video frames in a unit to be composed into a single 3D image in the 3D display signal. This can be achieved by adding the corresponding functionality into the synchronization unit 11

The 3D display device 13 is for displaying 3D image data. The device has an input interface unit 14 for receiving the 3D display signal 56 including the 3D image data in frames and the frame type synchronization indicators transferred from the source device 10. Each frame has a data structure for representing a sequence of digital image pixel data, and each frame type represents a partial 3D data structure. The display device is provided with further user control elements 16, for setting display parameters of the display, such as contrast, color or depth parameters. The transferred image data is processed in processing unit 18 according to the setting commands from the user control elements and generating display control signals for rendering the 3D image data on the 3D display based on the different frame types. The device has a 3D display 17 receiving the display control signals for displaying the processed image data, for example a dual LCD. The display device 13 is a stereoscopic display, also called 3D display, having a display depth range indicated by arrow 44. The display of 3D image data is performed in dependence of the different frames each providing a respective partial 3D image data structure.

The display device further includes a detection unit 19 coupled to the processing unit 18 for retrieving the frame type synchronization indicator from the 3D display signal and for detecting the different frame types in the received 3D display signal. The processing unit 18 is arranged for generating the display control signals based on the various types of image data as defined by the partial 3D data structures of the respective 3D video format, e.g. a 2D image and a depth frame. The respective frames are recognized and synchronized in time as indicated by the respective frame type synchronization indicators.

The display device is adapted to detect the 3D transfer information comprising at least information about the number of video frames in a unit to be composed into a single 3D image in the 3D display signal; and to use the 3D transfer information for generating the display control signals in dependence on the 3D transfer information. This can be achieved for example by adapting the detection unit 19 to detect the 3D transfer information and by adapting the processing means (18) to generating the display control signals in dependence on the 3D transfer information;

The frame type synchronization indicators allow detecting which of the frames must be combined to be displayed at the same time, and also indicate the frame type so that the respective partial 3D data can be retrieved and processed. The 3D display signal may be transferred over a suitable high speed digital video interface such as the well known HDMI interface (e.g. see "High Definition Multimedia Interface Specification Version 1.3a of Nov 10 2006).

Figure 1 further shows the record carrier 54 as a carrier of the 3D image data. The record carrier is disc-shaped and has a track and a central hole. The track, constituted by a series of physically detectable marks, is arranged in accordance with a spiral or concentric pattern of turns constituting substantially parallel tracks on an information layer. The record carrier may be optically readable, called an optical disc, e.g. a CD, DVD or BD (Blue-ray Disc). The information is represented on the information layer by the optically detectable marks along the track, e.g. pits and lands. The track structure also comprises position information, e.g. headers and addresses, for indication the location of units of information, usually called information blocks. The record carrier 54 carries information representing digitally encoded image data like video, for example encoded according to the MPEG2 or MPEG4 encoding system, in a predefined recording format like the DVD or BD format.

It is noted that a player may support playing various formats, but not be able to transcode the video formats, and a display device may be capable of playing a limited set of video formats. This means there is a common divider what can be played. Note that, depending the disc or the content, the format may change during playback/operation of the system. Real-time synchronization of format needs to take place, and real-time switching of formats is provided by the frame type synchronization indicator.

The following section provides an overview of three-dimensional displays and perception of depth by humans. 3D displays differ from 2D displays in the sense that they can provide a more vivid perception of depth. This is achieved because they provide more depth cues then 2D displays which can only show monocular depth cues and cues based on motion.

Monocular (or static) depth cues can be obtained from a static image using a single eye. Painters often use monocular cues to create a sense of depth in their paintings. These cues include relative size, height relative to the horizon, occlusion, perspective, texture gradients, and lighting/shadows. Oculomotor cues are depth cues derived from tension in the muscles of a viewers eyes. The eyes have muscles for rotating the eyes as well as for stretching the eye lens. The stretching and relaxing of the eye lens is called accommodation and is done when focusing on a image. The amount of stretching or relaxing of the lens muscles provides a cue for how far or close an object is. Rotation of the eyes is done such that both eyes focus on the same object, which is called convergence. Finally motion parallax is the effect that objects close to a viewer appear to move faster than objects further away.

Binocular disparity is a depth cue which is derived from the fact that both our eyes see a slightly different image. Monocular depth cues can be and are used in any 2D visual display type. To re-create binocular disparity in a display requires that the display can segment the view for the left - and right eye such that each sees a slightly different image on the display. Displays that can re-create binocular disparity are special displays which we will refer to as 3D or stereoscopic displays. The 3D displays are able to display images along a depth dimension actually perceived by the human eyes, called a 3D display having display depth range in this document. Hence 3D displays provide a different view to the left- and right eye.

3D displays which can provide two different views have been around for a long time. Most of these were based on using glasses to separate the left- and right eye view. Now with the advancement of display technology new displays have entered the market which can provide a stereo view without using glasses. These displays are called auto-stereoscopic displays.

A first approach is based on LCD displays that allow the user to see stereo video without glasses. These are based on either of two techniques, the lenticular screen and the barrier displays. With the lenticular display, the LCD is covered by a sheet of lenticular lenses. These lenses diffract the light from the display such that the left- and light eye receive light from different pixels. This allows two different images one for the left- and one for the right eye view to be displayed.

An alternative to the lenticular screen is the Barrier display, which uses a parallax barrier behind the LCD and in front the backlight to separate the light from pixels in the LCD. The barrier is such that from a set position in front of the screen, the left eye sees different pixels then the right eye. The barrier may also be between the LCD and the human viewer so that pixels in a row of the display alternately are visible by the left and right eye. A problem with the barrier display is loss in brightness and resolution but also a very narrow viewing angle. This makes it less attractive as a living room TV compared to the lenticular screen, which for example has 9 views and multiple viewing zones.

A further approach is still based on using shutter-glasses in combination with high-resolution beamers that can display frames at a high refresh rate (e.g. 120 Hz). The high refresh rate is required because with the shutter glasses method the left and right eye view are alternately displayed. For the viewer wearing the glasses perceives stereo video at 60 Hz. The shutter-glasses method allows for a high quality video and great level of depth.

The auto stereoscopic displays and the shutter glasses method do both suffer from accommodation-convergence mismatch. This does limit the amount of depth and the time that can be comfortable viewed using these devices. There are other display technologies, such as holographic- and volumetric displays, which do not suffer from this problem. It is noted that the current invention may be used for any type of 3D display that has a depth range.

Image data for the 3D displays is assumed to be available as electronic, usually digital, data. The current invention relates to such image data and manipulates the image data in the digital domain. The image data, when transferred from a source, may already contain 3D information, e.g. by using dual cameras, or a dedicated preprocessing system may be involved to (re-)create the 3D information from 2D images. Image data may be static like slides, or may include moving video like movies. Other image data, usually called graphical data, may be available as stored objects or generated on the fly as required by an application. For example user control information like menus, navigation items or text and help annotations may be added to other image data.

There are many different ways in which stereo images may be formatted, called a 3D image format. Some formats are based on using a 2D channel to also carry the stereo information. For example the left and right view can be interlaced or can be placed side by side and above and under. These methods sacrifice resolution to carry the stereo information. Another option is to sacrifice color, this approach is called anaglyphic stereo. Anaglyphic stereo uses spectral multiplexing which is based on displaying two separate, overlaid images in complementary colors. By using glasses with colored filters each eye only sees the image of the same color as of the filter in front of that eye. So for example the right eye only sees the red image and the left eye only the green image.

A different 3D format is based on two views using a 2D image and an additional depth image, a so called depth map, which conveys information about the depth of objects in the 2D image. The format called image + depth is different in that it is a combination of a 2D image with a so called "depth", or disparity map. This is a gray scale image, whereby the gray scale value of a pixel indicates the amount of disparity (or depth in case of a depth map) for the corresponding pixel in the associated 2D image. The display device uses the disparity, depth or parallax map to calculate the additional views taking the 2D image as input. This may be done in a variety of ways, in the simplest form it is a matter of shifting pixels to the left or right dependent on the disparity value associated to those pixels. The paper entitled "Depth image based rendering, compression and transmission for a new approach on 3D TV" by Christoph Fen gives an excellent overview of the technology (see http://iphome.hhi.de/fehn/Publications/fehn_EI2004.pdf).

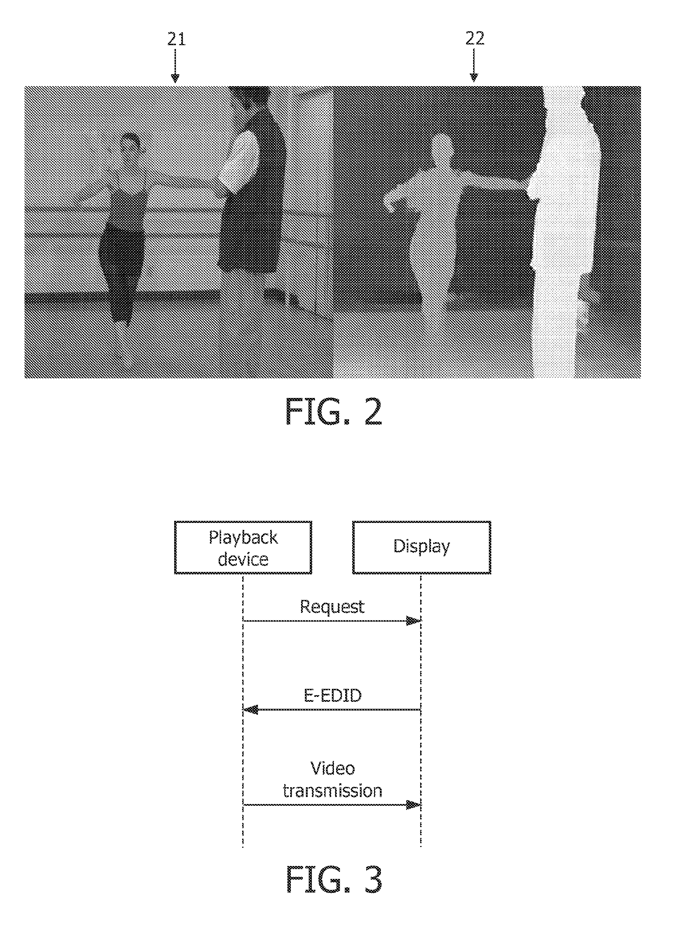

Figure 2 shows an example of 3D image data. The left part of the image data is a 2D image 21, usually in color, and the right part of the image data is a depth map 22. The 2D image information may be represented in any suitable image format. The depth map information may be an additional data stream having a depth value for each pixel, possibly at a reduced resolution compared to the 2D image. In the depth map grey scale values indicate the depth of the associated pixel in the 2D image. White indicates close to the viewer, and black indicates a large depth far from the viewer. A 3D display can calculate the additional view required for stereo by using the depth value from the depth map and by calculating required pixel transformations. Occlusions may be solved using estimation or hole filling techniques. Additional frames may be included in the data stream, e.g. further added to the image and depth map format, like an occlusion map, a parallax map and/or a transparency map for transparent objects moving in front of a background.

Adding stereo to video also impacts the format of the video when it is sent from a player device, such as a Blu-ray disc player, to a stereo display. In the 2D case only a 2D video stream is sent (decoded picture data). With stereo video this increases as now a second stream must be sent containing the second view (for stereo) or a depth map. This could double the required bitrate on the electrical interface. A different approach is to sacrifice resolution and format the stream such that the second view or the depth map are interlaced or placed side by side with the 2D video.

Figure 2 shows an example of 2D data and a depth map. The depth display parameters that are sent to the display to allow the display to correctly interpret the depth information. Examples of including additional information in video are described in the ISO standard 23002-3 "Representation of auxiliary video and supplemental information" (e.g. see ISO/IEC JTC1/SC29/WG11 N8259 of July 2007). Depending on the type of auxiliary stream the additional image data consists either of 4 or two parameters. The frame type synchronization indicator may comprise a 3D video format indicator indicative of the respective 3D video transfer format in a subsequent section of the 3D display signal. This allows to indicate or change the 3D video transfer format, or to reset the transfer sequence or to set or reset further synchronization parameters.

In an embodiment the frame type synchronization indicator includes a frame sequence indicator indicative of a frequency of at least one frame type. Note that some frame types allow a lower frequency of transmission without substantial deterioration of the perceived 3D image, for example the occlusion data. Furthermore, an order of the different frame types may be indicated as a sequence of different frames types to be repeated.

In an embodiment the frame type synchronization indicator and the 3D transfer information includes a frame sequence number. Individual frames may also be provided with the frame sequence number. The sequence number is incremented regularly, e.g. when all frames constituting a single 3D image have been send and the following frames belong to a next 3D image. Hence the number is different for every synchronization cycle, or may change only for a larger section. Hence when a jump is performed the set of frames having the same respective sequence number must be transferred before the image display can be resumed. The display device will detect the deviating frame sequence number and will only combine a complete set of frames. This prevents that after a jump to a new location an erroneous combination of frames is used.

When adding graphics on video, further separate data streams may be used to overlay the additional layers in the display unit. Such layer data is included in different frame types, which are separately marked by adding respective frame type synchronization indicators in the 3D display signal as discussed in detail below. The 3D video transfer format now comprises a main video and at least one additional video layer transferred via respective frame types and the frame type synchronization indicator comprises at least one of a main frame type indicator and an additional layer frame type indicator. The additional video layer may, for example, be subtitles or other graphical information like a menu or any other on screen data (OSD).

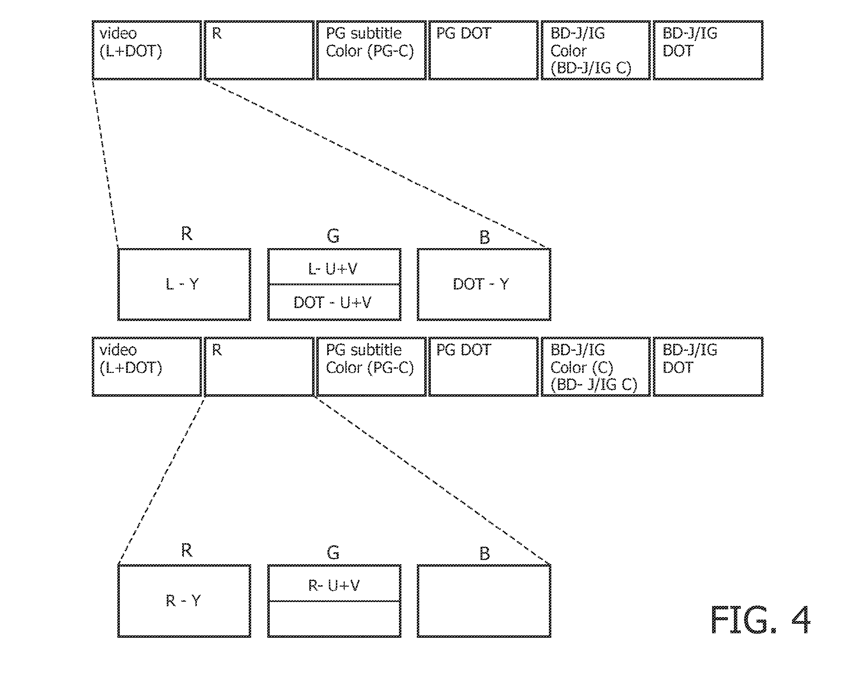

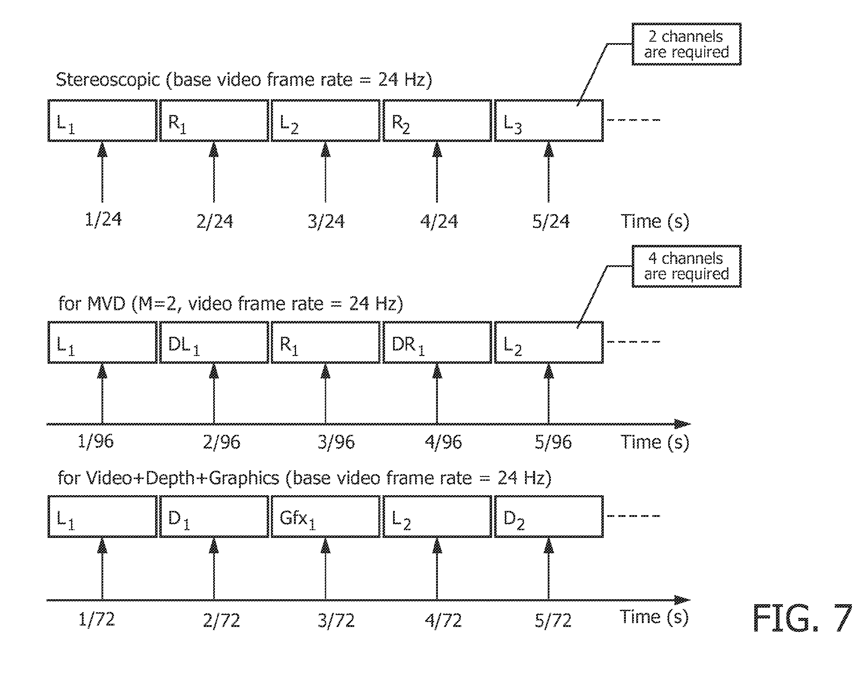

A possible format for the units of frames will be described with reference to figures 4 to 7. This format has also been described in EP application no 09150947.1 (Applicant docket number PH 012841), from which priority is claimed and which is inserted herein by reference.

The received compressed stream comprises 3D information that allows compositing and rendering on both stereoscopic and auto stereoscopic display, i.e. the compressed stream comprises a left and a right video frame, and depth (D), transparency (T) and occlusion (O) information for allowing rendering based on 2D + depth information. In the following depth (D), transparency (T) and occlusion (O) information will be shorthanded named as DOT.

The presence of both Stereo and DOT as compresses streams allows compositing and rendering that is optimized by the display, depending on the type and size of display while compositing is still controlled by the content author.

The following components are transmitted over the display interface:
- Decoded video data (not mixed with PG and IG/BD-J)
- presentation graphics (PG) data
- Interactive graphics (IG) or BD-Java generated (BD-J) Graphics data
- Decoded Video DOT
- presentation graphics (PG) DOT
- Interactive graphics (IG) or BD-Java generated (BD-J) Graphics

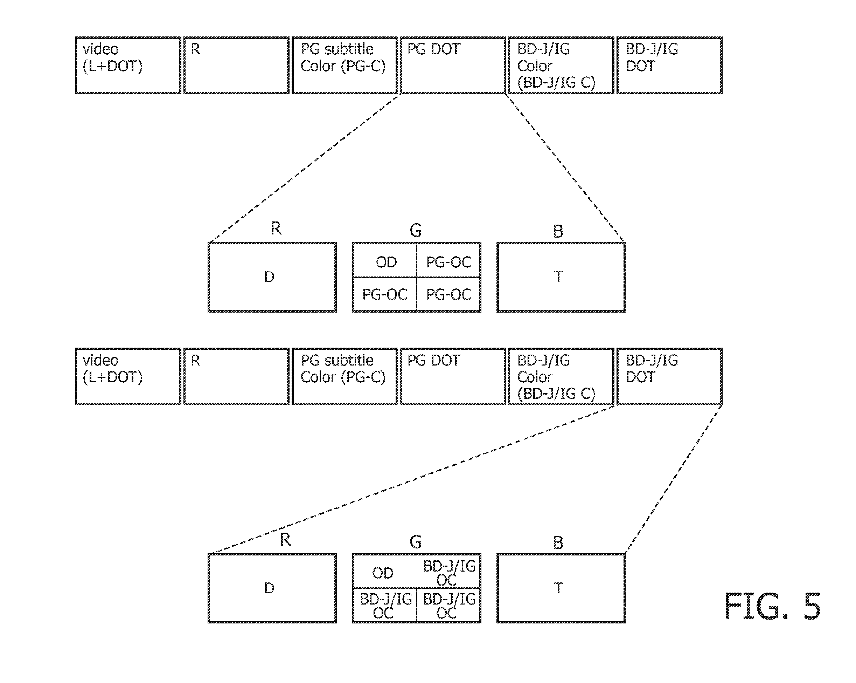

Figure 4 and 5 show schematically units of frames to be sent over the video interface.

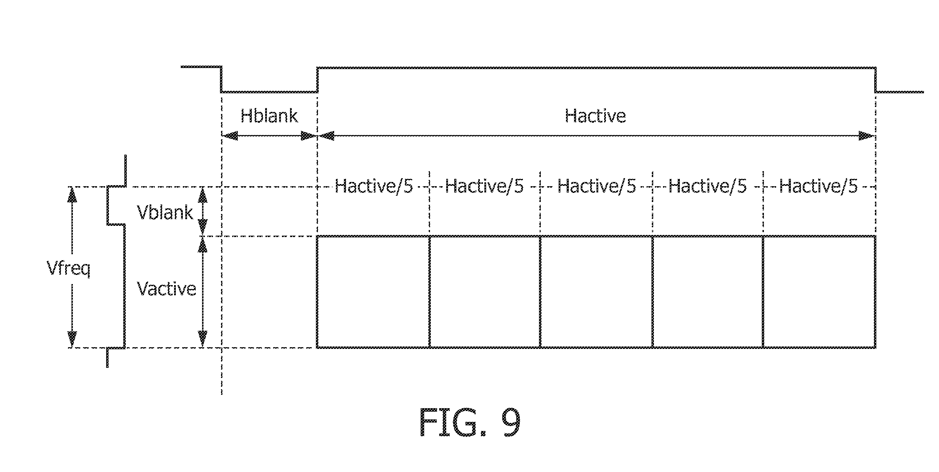

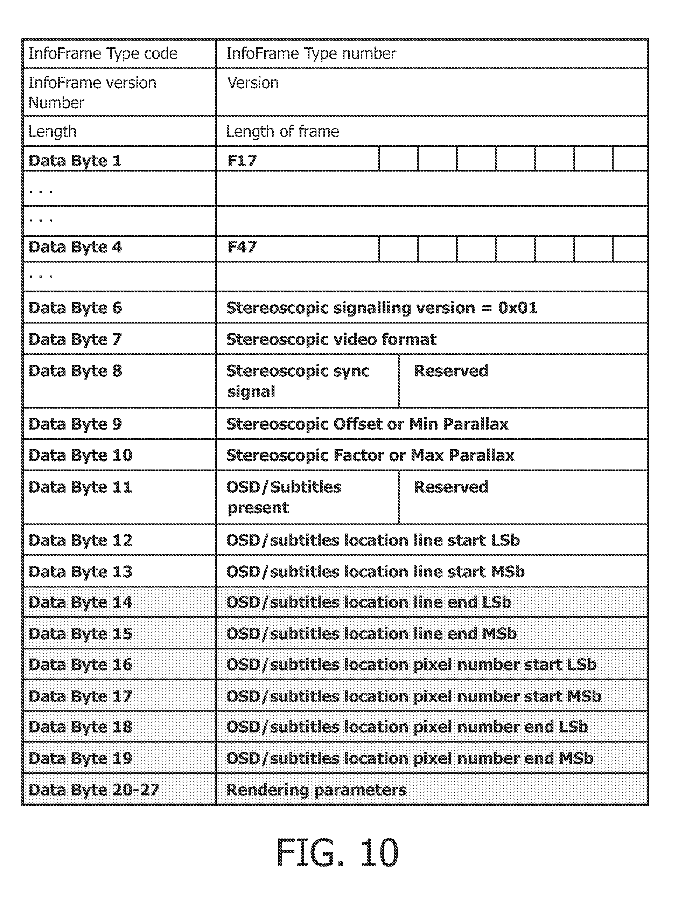

The Output stage sends over the interface (Preferably HDMI) units of 6 frames organized as follows:
Frame 1 : The YUV components of the Left (L) video and DOT video are combined in one 24 Hz RGB output frame, components, as illustrated in the top drawing of figure 9. YUV designate as usual in the field of video processing the standard luminance (Y) and chroma (UV) components
Frame 2 : The Right (R) video is sent unmodified out, preferably at 24 Hz as illustrated in the bottom drawing of figure 9
Frame 3 : The PC color (PG-C) is sent unmodified out, as RGB components, preferably at 24 Hz.
Frame 4 : The transparency of the PG-Color is copied into a separate graphics DOT output plane and combined with the depth and the 960x540 occlusion and occlusion depth (OD) components for various planes, as illustrated in the top drawing of figure 10..
Frame 5 : The BD-J/IG color (C) is sent unmodified out preferably at 24 Hz.
Frame 6 : The transparency of the BD-J/IG Color is copied into a separate graphics DOT output plane and combined with the depth and the 960x540 occlusion and occlusion depth (OD) components, as illustrated in the bottom drawing of figure 10...

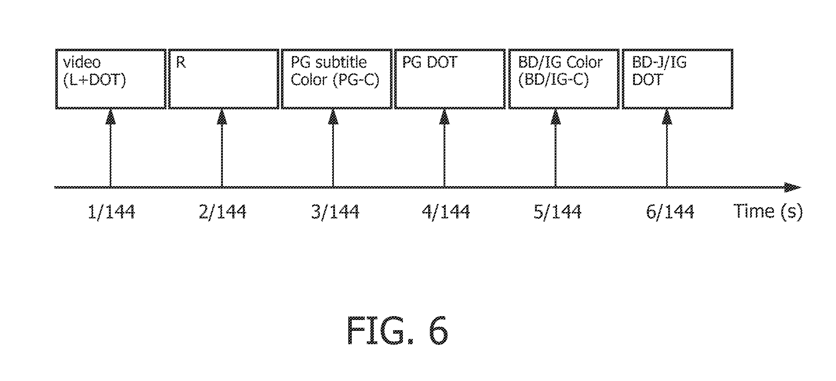

Figure 6 shows schematically the time output of frames over the video interface, according to the preferred embodiment of the invention. Herein the components are sent at 24Hz components interleaved in time over the HDMI interface at an interface frequency of 144Hz to the display.

Advantages of the this 3D video format:
- The full resolution flexible 3D stereo + DOT format and 3D HDMI output allows enhanced 3D video (variable baseline for display size dependency) and enhanced 3D graphics (less graphics restrictions, 3D TV OSD) possibilities for various 3D displays (stereo and auto-stereoscopic).
- No compromises to quality, authoring flexibility and with minimal cost to player hardware. Compositing and rendering is done in the 3D display.
- The required higher video interface speed is being defined in HDMI for 4k2k formats and can already be implemented with dual-link HDMI. Dual link HDMI also supports higher frame rates such as 30Hz etc.

The 3D transfer information indicator may comprise, for the additional video layer, layer signaling parameters. The parameters may be indicative of at least one of
- type and/or format of additional layer;
- location of display of the additional layer with respect to display of the main video;
- size of display of the additional layer;
- time of appearance, disappearance and or duration of display of the additional layer;
- additional 3D display settings or 3D display parameters.

Further detailed examples are discussed below.

Figure 3 shows playback device and display device combination. The player 10 reads the capabilities of the display 13 and adjusts the format and timing parameters of the video to send the highest resolution video, spatially as well as temporal, that the display can handle. In practice a standard is used called EDID. Extended display identification data (EDID) is a data structure provided by a display device to describe its capabilities to an image source, e.g. a graphics card. It enables a modern personal computer to know what kind of monitor is connected. EDID is defined by a standard published by the Video Electronics Standards Association (VESA). Further refer to VESA DisplayPort Standard Version 1, Revision 1a, January 11, 2008 available via http://www.vesa.org/.

The EDID includes manufacturer name, product type, phosphor or filter type, timings supported by the display, display size, luminance data and (for digital displays only) pixel mapping data. The channel for transmitting the EDID from the display to the graphics card is usually the so called I²C bus. The combination of EDID and I²C is called the Display Data Channel version 2, or DDC2. The 2 distinguishes it from VESA's original DDC, which used a different serial format. The EDID is often stored in the monitor in a memory device called a serial PROM (programmable read-only memory) or EEPROM (electrically erasable PROM) that is compatible with the I²C bus.

The playback device sends an E-EDID request to the display over the DDC2 channel. The display responds by sending the E-EDID information. The player determines the best format and starts transmitting over the video channel. In older types of displays the display continuously sends the E-EDID information on the DDC channel. No request is send. To further define the video format in use on the interface a further organization (Consumer Electronics Association; CEA) defined several additional restrictions and extensions to E-EDID to make it more suitable for use with TV type of displays. The HDMI standard (referenced above) in addition to specific E-EDID requirements supports identification codes and related timing information for many different video formats. For example the CEA 861-D standard is adopted in the interface standard HDMI. HDMI defines the physical link and it supports the CEA 861-D and VESA E-EDID standards to handle the higher level signaling. The VESA E-EDID standard allows the display to indicate whether it supports stereoscopic video transmission and in what format. It is to be noted that such information about the capabilities of the display travels backwards to the source device. The known VESA standards do not define any forward 3D information that controls 3D processing in the display.

In an embodiment the 3D transfer information in the 3D display signal is transferred asynchronously, e.g. as a separate packet in a data stream while identifying the respective frame to which it relates. The packet may include further data for frame accurately synchronizing with the video, and may be inserted at an appropriate time in the blanking intervals between successive video frames. In a practical embodiment 3D transfer information is inserted in packets within the HDMI Data Islands.

An example of including the 3D transfer information in Auxiliary Video Information (AVI) as defined in HDMI in an audio video data (AV) stream is as follows. The AVI is carried in the AV-stream from the source device to a digital television (DTV) Monitor as an Info Frame. If the source device supports the transmission of the Auxiliary Video Information (AVI) and if it determines that the DTV Monitor is capable of receiving that information, it shall send the AVI to the DTV Monitor once per VSYNC period. The data applies to the next full frame of video data.

In the following section, a short description of HMDI signaling will be presented. In HDMI, a device with an HDMI output is known as a source, while a device with an HDMI input is known as sink. An InfoFrame is a data structure defined in CEA-861-D that is designed to carry a variety of auxiliary data items regarding the audio or video streams or the source device and is carried from Source to Sink across HDMI. A Video Field is the period from one VSYNC active edge to the next VSYNC active edge. A video format is sufficiently defined such that when it is received at the monitor, the monitor has enough information to properly display the video to the user. The definition of each format includes a Video Format Timing, the picture aspect ratio, and a colorimetric space. Video Format Timing The waveform associated with a video format. Note that a specific Video Format Timing may be associated with more than one Video Format (e.g., 720X480p@4:3 and 720X480p@16:9).

HDMI includes three separate communications channels: TMDS, DDC, and the optional CEC. TMDS is used to carry all audio and video data as well as auxiliary data, including AVI and Audio InfoFrames that describe the active audio and video streams. The DDC channel is used by an HDMI Source to determine the capabilities and characteristics of the Sink by reading the E-EDID data structure.

HDMI Sources are expected to read the Sink's E-EDID and to deliver only the audio and video formats that are supported by the Sink. In addition, HDMI Sinks are expected to detect InfoFrames and to process the received audio and video data appropriately.

The CEC channel is optionally used for higher-level user functions such as automatic setup tasks or tasks typically associated with infrared remote control usage.

An HDMI link operates in one of three modes: Video Data Period, Data Island period, and Control period. During the Video Data Period, the active pixels of an active video line are transmitted. During the Data Island period, audio and auxiliary data are transmitted using a series of packets. The Control period is used when no video, audio, or auxiliary data needs to be transmitted. A Control Period is required between any two periods that are not Control Periods.

**Table 1 illustrated packet types in a HDMI data Island**

| **Packet Type Value** | | **Packet Type** |
|---|---|---|
| 0×00 | | Null |
| 0×01 | | Audio Clock Regeneration (N/CTS) |
| 0×02 | | Audio Sample {L-PCM and IEC 61937 compressed formats} |
| 0×03 | | General Central |
| 0×04 | | ACP Packet |
| 0×05 | | ISRC1 Packet |
| 0×06 | | ISRC2 Packet |
| 0×07 | | One Bit Audio Sample Packet |
| 0×08 | | DST Audio Packet |
| 0×09 | | High Bitrate (HBR) Audio Steam Packet (IEC 61937) |
| 0×0A | | Gamut Metadata Packet |
| 0x80+InfoFrance Type | | InfoFrame Packet |
| | 0x81 | Vendor-Specific InfoFrame |
| | 0x82 | AVI InfoFrame |
| | 0x83 | Source Product Descriptor InfoFrame |
| | 8x84 | Audio InfoFrame |
| | 0x85 | MPEG Source InfoFrame |

It was identified by the inventors that the present Infoframe Packet, AVI info frame etc are not suitable for handling transmission of 3D video data

In general, the transmission of 3D video data can be characterized by 3 parameters:
- VIC (pixel repeat rate) from table 8.7 in the HDMI spec e.g. 1920x1080p@60Hz
- number of frames in a unit of frames of a single 3D image
   N=1 for monoscopic
   N=2 for stereo and video+depth
   N=3 for video+depth+graphics
   N=4 for MVD @ M=2, etc
   N=6 for the unit defined with reference to figs 4 to 6
- the format: way of multiplexing the channels
   - frame alternating
   - field alternating
   - line alternating
   - side by side
   - checker board, etc.

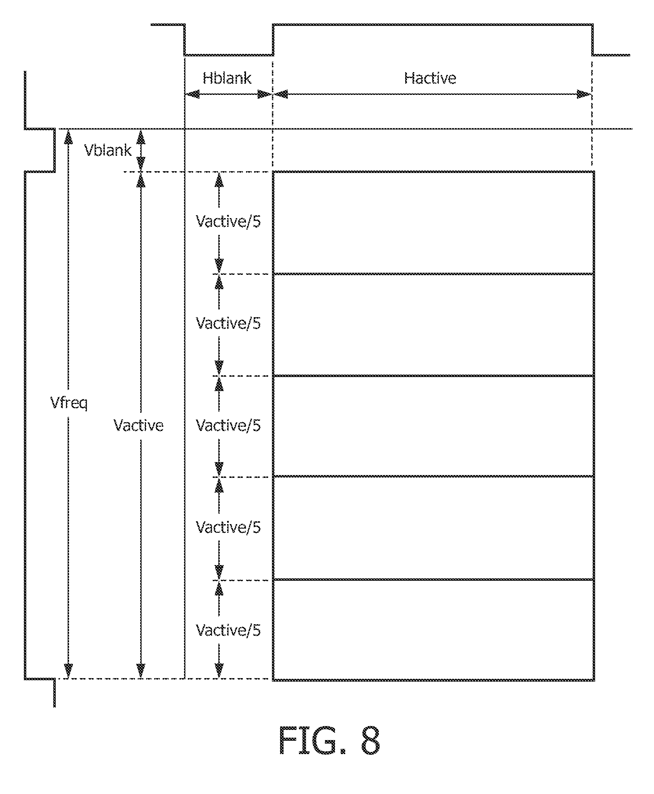

Figure 8 shows horizontal and vertical blanking and signaling for a • *D* + DOT format @1920 pixels. The Figure shows a multiplexing scheme of frame alternating multiplexing. In the example 5 frames indicated by Vactive/5 constitute the 3D image of the 3D+DOT format, which frames are sequentially arranged in the unit between the vertical synchronization pulses VSYNC of the 3D signal, indicated by Vfreq. The vertical synchronization pulses indicate the video data period Vactive starting after the vertical blanking Vblank, in which period the frames are sequentially arranged. Similarly the horizontal blanking pulses HSYNC indicate the line period Hactive starting after the horizontal blanking Hblank. Hence the frame alternating multiplexing scheme indicates said number of frames being sequentially arranged within said video data period.

Figure 9 shows horizontal and vertical blanking and signaling for a• D + DOT format 720 pixels sent as 1920progressive @30Hz. The Figure shows a multiplexing scheme of side by side frame multiplexing. In the example 5 frames indicated by Hactive/5 constitute the 3D image of the 3D+DOT format, which frames are side by side arranged in the unit between the vertical synchronization pulses VSYNC of the 3D signal, indicated by Vfreq. The vertical synchronization pulses indicate the video data period Vactive starting after the vertical blanking Vblank, in which period the frames are arranged side by side. Similarly the horizontal blanking pulses HSYNC indicate the line period Hactive starting after the horizontal blanking Hblank. Hence the side by side frame multiplexing scheme indicates said number of frames being sequentially arranged within said video data period.

For maximum flexibility, according to the invention, the above parameters of the multiplexing scheme should be transmitted in three separate fields.

In an embodiment of the invention, these are sent over in AVI info frames and/or HDMI Vendor Specific InfoFrames.

In the following detailed embodiment in the case of HDMI interfaces will be presented:
Table 2 described the relevant byte of the InfoFrame packet according to a preferred embodiment of the invention.

Therein, HDMI_VIC0...HDMI_VIC7 describe the Video Format Identification Code. When transmitting any video format defined in this section, an HDMI Source shall set the HDMI_VIC field to the Video Code for that format.

Therein, HDMI_3D_FMT0...HDMI_3D_FMT describe 3D Format Code. When transmitting any video format defined in this section, an HDMI Source shall set the HDMI_3D_Format field to the Video Code for that format.

**Table 2**

| Packet Byte # | 7 | 6 | 5 | 4 | 3 | 2 | 1 | 0 |
|---|---|---|---|---|---|---|---|---|
| PB0 | 24bit IEEE Registration Identifier ((0x000C03)) | | | | | | | |
| PB1 | (Least Significant Byte first) | | | | | | | |
| PB2 | | | | | | | | |
| PB3 | HDMI_V IC7 | HDMI_V IC6 | HDMI _VIC5 | HDMI_VI C4 | HDMI_V IC3 | HDMI_V IC2 | HDMI_V IC1 | HDMI_VIC0 |
| PB4 | HDMI_3 D_FMT7 | HDMI_3 D_FMT6 | HDMI _3D_F MT 5 | HDMI_3D _FMT 4 | HDMI_3 D_FMT 3 | HDMI_3 D_FMT 2 | HDMI_3 D_FMT 1 | HDMI_3D_F MT 0 |
| PB5 ∼ (Nv-4) | Reserved (0) | | | | | | | |

According to the invention, additional video timing format values, which are identified by HDMI_VIC numbers, are defined for 3D (stereoscopic) transmission.

The following video formats are used for 3D transmission. The left and right picture for each eyes of audience can be distinguished uniquely with using the video format definition of this section, so that any other additional information packet is not needed. Table 3 shows the value of HDMI_VIC which is described in the related EDID and InfoFrame.

**Table 3 HDMI_VIC for 3D transmission**

| | | | (Hz) | | |
|---|---|---|---|---|---|
| HDMI_VIC | Hactive | Vactive | V freq | no of channels | Description |
| 1 | 1920 | 1080 | 60 | 1 | 1080i FullHD 60Hz |
| 2 | 1920 | 1080 | 50 | 1 | 1080i FullHD 50Hz |
| 3 | 1920 | 1080 | 60 | 1 | 1080p FullHD 60Hz |
| 4 | 1920 | 1080 | 50 | 1 | 1080p FullHD 50Hz |
| 5 | 1920 | 1080 | 24 | 1 | 1080p FullHD 24Hz |
| 6 | 1920 | 1080 | 60 | 2 | 1080i FullHD 60Hz |
| 7 | 1920 | 1080 | 50 | 2 | 1080i FullHD 50Hz |
| 8 | 1920 | 1080 | 60 | 2 | 1080p FullHD 60Hz |
| 9 | 1920 | 1080 | 50 | 2 | 1080p FullHD 50Hz |
| 10 | 1920 | 1080 | 24 | 2 | 1080p FullHD 24Hz |
| 11 | 1920 | 1080 | 60 | 3 | 1080i FullHD 60Hz |
| etc. | etc. | etc. | etc. | etc. | etc. |

According to the invention The format of HDMI proprietary multiplexing of 3D channels is identified by HDMI_3D_FMT numbers, an example of which are defined in table 4.

### For 3D (stereoscopic) transmission

The following 3D formats are used for 3D transmission. The format of the multiplexing of the information in the channels of a 3D transmission can be distinguished uniquely with using the 3D format definition of this section, so that any other additional information packet is not needed. Table 4 shows the value of HDMI_3D_Format which is described in the EDID and related InfoFrame.

**Table 4 HDMI_3D_FMT for 3D Transmission**

| **HDMI_3D FMT code** | **Description** |
|---|---|
| 1 | Frame alternating |
| 2 | Field alternating |
| 3 | Line alternating |
| 4 | Side by Side |
| 5 | 2D+D |
| 6 | 2D+D+gfx1 |
| 7 | L+DL+R+DR |

**Table 5 HDMI_VIC for extended resolution transmission**

| | | | | | **(Hz)** | **(MHz)** | |
|---|---|---|---|---|---|---|---|
| **HDM I_VIC** | **Hactive** | **Vactive** | **Hblank** | **Vblank** | **V Freq** | **Pixel Freq** | Description |
| 14 | 1920 | 5400 | 280 | 45 | 24 | 287.496 | 1080p FullHD 24Hz DOT |
| 15 | 6400 | 720 | 370 | 30 | 60 | 304.650 | 1280p HD 60Hz DOT |
| 16 | 9600 | 1080 | 280 | 45 | 30 | 333.450 | 1080p FullHD 30Hz DOT |

According to the invention, a player device is able to send 3D Metadata from Source towards Sink (amongst others):
- Content format
- Real-time 2D/3D signaling
- Synchronization
- Recommended field-of-view
- Subtitle information

According to the invention, additional 3D content Metadata may be included in the 3D video data being transmitted, the metadata being preferably aligned to the SMPTE 3D master format.

Several options are listed; the metadata may be included in one of the following:
- 3D InfoFrame type (CEA),
- AVI Infoframe,
- Vendor Specific Infoframe (VSIF), CEC,.

In the following section, specific embodiments for sending of stereo information or the case in which the units comprise two frames will be introduced.

It is proposed to use the black bar information in AVI-Info frames to accommodate the frame type synchronization indicator, e.g. for left-right signaling and additional information for proper rendering of 3D video in the display. The AVI-info frame is a data block that is sent at least every two fields. Because of this reason it is the only info frame that can transmit signaling on a frame basis which is a requirement if it is to be used for synchronization of the stereoscopic video signal. The advantage of this solution compared to other solutions that rely on relative signaling or that rely on vendor specific info-frames is that it is compatible with current chipsets for HDMI and that it provides frame accurate synchronization and sufficient room (8 bytes) for signaling.

In an alternative embodiment it is proposed to use the preamble bits as defined in HDMI to signal that the video data that follows is a left- or a light video frame. HDMI chapter 5.2.1.1 defines that immediately preceding each Video Data Period or Data Island Period is the Preamble. This is a sequence of eight identical Control characters that indicate whether the upcoming data period is a Video Data Period or is a Data Island. The values of CTL0, CTL1, CTL2, and CTL3 indicate the type of data period that follows. The remaining Control signals, HSYNC and VSYNC, may vary during this sequence. The preamble currently is 4 bits, CTL0, CTL1 CLT3 and CTL4. At the moment only 1000 and 1010 as values are used. For example the values 1100 or 1001 may now be defined to indicate that the video data contains either a left or a right video frame, or alternatively frames that contain the image and/or depth information. Also the preamble bits may only indicate a 3D frame type or a first 3D frame of a sequence, while the further discrimination of frame types may be according to a frame type synchronization sequence defined by a further data frame. Also, the HSYNC and VSYNC signaling may be adapted to convey at least part of the frame type synchronization, e.g. whether a frame is left or a light video frame. The HSYNC is arranged to precede video data of a left frame and the VSYNC a right frame of video information. The same principle may be applied to other frame types like 2D image and depth information.

Figure 10 shows a table of an AVI-info frame extended with a frame type synchronization indicator. The AVI-info frame is defined by the CEA and is adopted by HDMI and other video transmission standards to provide frame signaling on color and chroma sampling, over- and under scan and aspect ratio. Additional information has been added to embody the frame type synchronization indicator, as follows.

The last bit of data byte 1; F17 and the last bit of data byte 4; F47 are reserved in the standard AVI-info frame. In an embodiment of the frame type synchronization indicator these are used to indicate presence of stereoscopic signaling in the black-bar information. The black bar information is normally contained in Data byte 6 to 13. Bytes 14-27 are normally reserved in HDMI and therefore might not be correctly transmitted with current hardware. Therefore these fields are used to provide less critical OSD location information. The syntax of the table is as follows. If F17 is set (=1) then the data byte through to 13 contains 3D parameter information. Default case is when F17 is not set (=0) which means there is no 3D parameter information.

Data bytes 12 through 19 indicate the location of the OSD/subtitle overlay. The additional layer may be smaller than the main video layer, and is positioned based on the location data of bytes 12-19. This enables the 3D display to perform specific rendering on the area of the screen indicated by the frame type synchronization indicator. The frame type synchronization indicator may further include synchronization timing information for indicating when the subtitles/OSD information must appear and/or disappear, e.g. in the data bytes 20-27 called Rendering parameters in Figure 10.

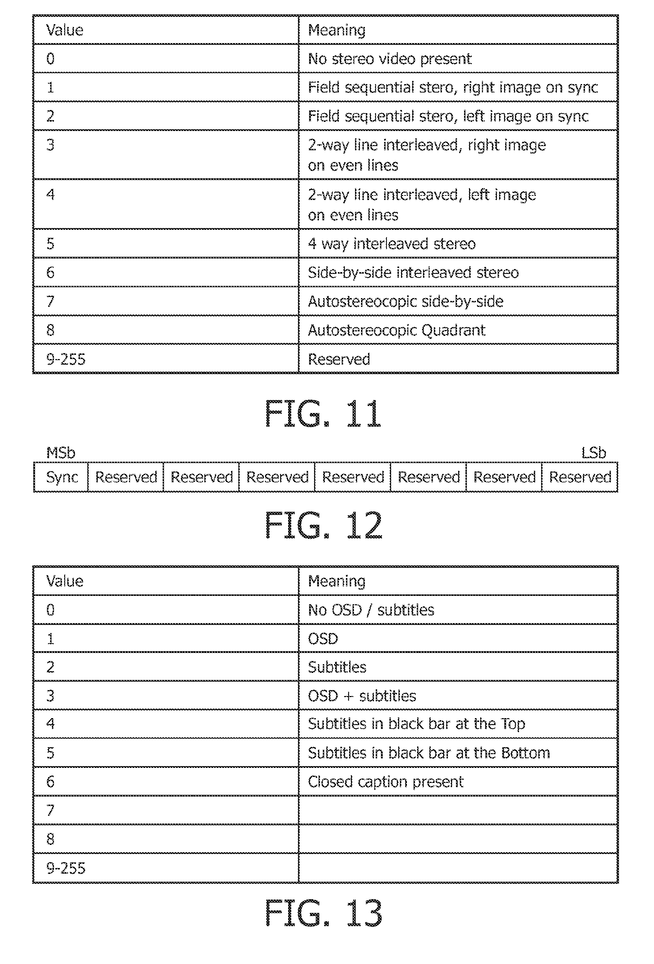

Figure 11 shows a Table of 3D video formats. The values that are in the left column each indicate a specific video format having respective different frame types. The selected value is included in the frame synchronization indicator, for example Data Byte 7 in the Table of Figure 10. Data Byte 7 describes the stereoscopic video format that the source (player) is transmitting. The Table of Figure 11 lists some of the possible values. Value 0 indicates that the associated frame is 2D, this is useful when transmitting segments of 2D video during a 3D title. The display device (3D-TV) may adapt his internal image processing to this change of 3D video format, for instance switch off temporal up conversion in case of frame sequential format.

Figure 12 shows a frame synchronization signal. The synchronization signal may be included in the frame synchronization indicator, for example Data Byte 8 in Figure 10. Data byte 8 carries the stereo sync signal, while Figure 12 shows the format of the sync signal. The sync signal indicates together with the video format the content of the video frame.

The values of data byte 9 and 10 in Figure 10 depend on the video format. For example for (auto-)stereoscopic video they indicate the maximum and minimum parallax of the video content. Alternatively, they may indicate the offset and scaling factor of the "depth" information. In case of higher bit accuracy requirement (i.e. 10-bit depth) additional registers could be used to store the lower bits.

Figure 13 shows values for additional video layers. The video format may be extended by allowing to separately include frames for additional layers like subtitles or menus (On Screen Data OSD) in the 3D video signal. In Figure 4 Data byte 11 may indicate the presence of subtitles or OSD overlay. Figure 13 shows a number of video format parameter values for indicating the additional layers. The remaining bytes 20-27 in Figure 10 may be used to provide specific parameters to indicate information for scaled depth and occlusion information related to 3D displays.

It is to be noted that the invention may be implemented in hardware and/or software, using programmable components. A method for implementing the invention has the processing steps corresponding to the transferring of 3D image data elucidated with reference to Figure 1. Although the invention has been mainly explained by embodiments using optical record carriers or the internet, the invention is also suitable for any image interfacing environment, like a 3D personal computer [PC] display interface, or 3D media center PC coupled to a wireless 3D display device.

The invention can be summarized as follows: A system of transferring of three dimensional (3D) image data is described. A 3D source device provides 3D display signal for a display via a high speed digital interface like HDMI. The 3D display signal comprises a sequence of frames constituting the 3D image data according to a 3D video transfer format. The sequence of frames comprises units, each unit corresponding frames comprising video information intended to be composited and displayed as a 3D image; each frame has a data structure for representing a sequence of digital image pixel data, and represents a partial 3D data structure. The 3D source device includes 3D transfer information comprising at least information about the number of video frames in a unit to be composed into a single 3D image in the 3D display signal. The display detects the 3D transfer information, and generates the display control signals based in dependence on the 3D transfer information. The 3D transfer information preferably further comprises information about the multiplexing scheme for multiplexing frames into the 3D display signal and most preferably comprises information over a pixel size and a frequency rate for frames.

It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software, and a processor may fulfill the function of one or more units, possibly in cooperation with hardware elements. Further, the invention is not limited to the embodiments, and lies in each and every novel feature or combination of features described above.

## Claims

1. Method of transferring of three dimensional [3D] image data, the method comprising, at a 3D source device,
- processing source image data to generate a 3D display signal, the 3D display signal comprising a sequence of frames constituting the 3D image data according to a 3D video transfer format, the 3D video format comprising a video data period during which pixels of active video are transmitted and a data island period during which audio and auxiliary data are transmitted using a series of packets, the packets including an info frame packet, which video data period and data island period are according to HDMI, and
- outputting the 3D display signal;
and, at a 3D display device,
- receiving the 3D display signal, and
- processing 3D display signal for generating display control signals for rendering the 3D image data on a 3D display,
the sequence of frames comprising units, the unit being a period from a vertical synchronization signal to the next vertical synchronization signal, each unit corresponding to a number of frames arranged according to a multiplexing scheme, the number of frames comprising video information intended to be composited and displayed as a 3D image;
- each frame in the unit having a data structure for representing a sequence of digital image pixel data, and each frame representing a partial 3D data structure, and wherein the method comprises, at the 3D source device,
- including 3D transfer information in the info frame packet, the 3D transfer information comprising at least information about the multiplexing scheme including the number of video frames in a unit to be composed into a single 3D image in the 3D display signal, the multiplexing scheme being selected of group of multiplexing schemes comprising at least frame alternating multiplexing, the frame alternating indicating said number of frames being sequentially arranged within said video data period; and
the number of frames intended to be composited and displayed as a 3D image for at least one multiplexing scheme comprising at least one frame of graphics information; and
- said generating the display control signals is performed in dependence on the 3D transfer information.

2. Method according to claim 1, wherein in the information about the multiplexing scheme, the group of multiplexing schemes further comprises at least one of:
- field alternating multiplexing;
- line alternating multiplexing;
- side by side frame multiplexing, the side by side frame multiplexing indicating said number of frames being arranged side by side within said video data period;
- 2D and depth frame multiplexing;
- 2D, depth, graphics and graphics depth frame multiplexing.

3. Method according to claim 1, wherein the 3D transfer information include information about a pixel size and a frequency rate for frames.

4. Method according to claim 3, wherein the 3D transfer information is included in the AVI InfoFrame.

5. Method according to claim 3, wherein the 3D transfer information is included in a Vendor Specific InfoFrame.

6. 3D source device for transferring of three dimensional [3D] image data to a 3D display device, the device comprising:
- generating means (52) for processing source image data to generate a 3D display signal (56), the 3D display signal comprising a sequence of frames constituting the 3D image data according to a 3D video transfer format, the 3D video format comprising a video data period during which pixels of active video are transmitted and a data island period during which audio and auxiliary data are transmitted using a series of packets, the packets including an info frame packet, which video data period and data island period are according to HDMI, and
- output interface means (12) for outputting the 3D display signal, each frame having a data structure for representing a sequence of digital image pixel data, and each frame representing a partial 3D data structure,
the sequence of frames comprising units, the unit being a period from a vertical synchronization signal to the next vertical synchronization signal, each unit corresponding to a number of frames arranged according to a multiplexing scheme, the number of frames comprising video information to video information intended to be composited and displayed as a 3D image;
wherein the output interface means are adapted to transmit 3D transfer information in the info frame packet, the 3D transfer information comprising at least information about the multiplexing scheme including the number of video frames in a unit to be composed into a single 3D image in the 3D display signal, the multiplexing scheme being selected of group of multiplexing schemes comprising at least frame alternating multiplexing, the frame alternating indicating said number of frames being sequentially arranged within said video data period; and
the number of frames intended to be composited and displayed as a 3D image for at least one multiplexing scheme comprises at least one frame of graphics information;
for, at the display device, generating display control signals in dependence on the 3D transfer information.

7. 3D source device as claimed in claim 6, wherein the output interface means are adapted to provide further information about the multiplexing scheme by the group of multiplexing schemes further comprising at least one of:
- field alternating multiplexing;
- line alternating multiplexing;
- side by side frame multiplexing, the side by side frame multiplexing indicating said number of frames being arranged side by side within said video data period;
- 2D and depth frame multiplexing;
- 2D, depth, graphics and graphics depth frame multiplexing.

8. 3D display device comprising:
- a 3D display (17) for displaying 3D image data,
- input interface means (14) for receiving a 3D display signal, the 3D display signal comprising frames constituting the 3D image data according to a 3D video transfer format, the 3D video format comprising a video data period during which pixels of active video are transmitted and a data island period during which audio and auxiliary data are transmitted using a series of packets, the packets including an info frame packet, which video data period and data island period are according to HDMI, and
- processing means (18) for generating display control signals for rendering the 3D image data on the 3D display,
- each frame having a data structure for representing a sequence of digital image pixel data, and each frame representing a partial 3D data structure, and
the sequence of frames comprising units, the unit being a period from a vertical synchronization signal to the next vertical synchronization signal, each unit corresponding to a number of frames arranged according to a multiplexing scheme, the number of frames comprising video information intended to be composited and displayed as a 3D image;
- wherein 3D transfer information in the info frame packet comprises
at least information about the multiplexing scheme including the number of video frames in a unit to be composed into a single 3D image in the 3D display signal, the multiplexing scheme being selected of group of multiplexing schemes comprising at least frame alternating multiplexing, the frame alternating indicating said number of frames being sequentially arranged within said video data period; and
the number of frames intended to be composited and displayed as a 3D image for at least one multiplexing scheme comprises at least one frame of graphics information; and
- the processing means (18) are arranged for generating the display control signals in dependence on the 3D transfer information.

9. 3D display device as claimed in claim 8, wherein the processing means (18) are arranged for generating the display control signals in dependence on further information about the multiplexing scheme by the group of multiplexing schemes further comprising at least one of:
- field alternating multiplexing;
- line alternating multiplexing;
- side by side frame multiplexing, the side by side frame multiplexing indicating said number of frames being arranged side by side within said video data period;
- 2D and depth frame multiplexing;
- 2D, depth, graphics and graphics depth frame multiplexing.

10. 3D display device as claimed in claim 9, wherein the 3D transfer information is included in the AVI InfoFrame.

11. 3D display device as claimed in claim 9, wherein the 3D transfer information is included in a Vendor Specific InfoFrame.

12. 3D display signal for transferring of three dimensional [3D] image data to a 3D display device, the 3D display signal comprising a sequence of frames constituting the 3D image data according to a 3D video transfer format, the 3D video format comprising a video data period during which pixels of active video are transmitted and a data island period during which audio and auxiliary data are transmitted using a series of packets, the packets including an info frame packet, which video data period and data island period are according to HDMI,
the sequence of frames comprising units, the unit being a period from a vertical synchronization signal to the next vertical synchronization signal, each unit corresponding to a number of frames arranged according to a multiplexing scheme, the number of frames comprising video information video information intended to be composited and displayed as a 3D image;
wherein
- each frame has a data structure for representing a sequence of digital image pixel data, and each frame represents a partial 3D data structure, wherein the 3D display signal comprises
- 3D transfer information in the info frame packet, the 3D transfer information comprising at least information about the multiplexing scheme including the number of video frames in a unit to be composed into a single 3D image in the 3D display signal, the multiplexing scheme being selected of group of multiplexing schemes comprising at least frame alternating multiplexing, the frame alternating indicating said number of frames being sequentially arranged within said video data period; and
the number of frames intended to be composited and displayed as a 3D image for at least one multiplexing scheme comprises at least one frame of graphics information;
for, at the display device, generating display control signals in dependence on the 3D transfer information.

13. 3D display signal as claimed in claim 12, wherein, in the information about the multiplexing scheme, the group of multiplexing schemes further comprises at least one of:
- field alternating multiplexing;
- line alternating multiplexing;
- side by side frame multiplexing, the side by side frame multiplexing indicating said number of frames being arranged side by side within said video data period;
- 2D and depth frame multiplexing;
- 2D, depth, graphics and graphics depth frame multiplexing.

## Patentansprüche

1. Verfahren zur Übertragung von dreidimensionalen [3D] Bilddaten, wobei gemäß dem Verfahren an einem 3D-Quellgerät
- Quellbilddaten verarbeitet werden, um ein 3D-Anzeigesignal zu erzeugen, wobei das 3D-Anzeigesignal eine Sequenz von Frames umfasst, welche die 3D-Bilddaten gemäß einem 3D-Videoübertragungsformat bilden, wobei das 3D-Videoformat eine Videodatenperiode, in der Pixel des aktiven Videos übertragen werden, sowie eine Dateninselperiode umfasst, in der Audio- und Hilfsdaten unter Verwendung einer Reihe von Paketen übertragen werden, wobei die Pakete ein Infoframe-Paket enthalten, wobei die Videodatenperiode und Dateninselperiode HDMI-konform sind, und
- das 3D-Anzeigesignal ausgegeben wird;
und an einer 3D-Anzeigeeinrichtung
- das 3D-Anzeigesignal empfangen wird, und
- das 3D-Anzeigesignal verarbeitet wird, um Anzeigesteuersignale zur Wiedergabe der 3D-Bilddaten auf einem 3D-Display zu erzeugen,
wobei die Sequenz von Frames Einheiten umfasst, wobei die Einheit eine Periode von einem Vertikalsynchronisierungssignal bis zu dem nächsten Vertikalsynchronisierungssignal ist, wobei jede Einheit einer entsprechend einem Multiplexschema angeordneten Anzahl von Frames entspricht, wobei die Anzahl von Frames Videoinformationen umfasst, die zusammengefasst und als ein 3D-Bild dargestellt werden sollen;
- wobei jeder Frame in der Einheit eine Datenstruktur zur Darstellung einer Sequenz digitaler Bildpixeldaten aufweist und jeder Frame eine partielle 3D-Datenstruktur darstellt, und wobei gemäß dem Verfahren an dem 3D-Quellgerät
- 3D-Übertragungsinformationen in dem Infoframe-Paket aufgenommen werden, wobei die 3D-Übertragungsinformationen zumindest Informationen über das Multiplexschema umfassen, die die Anzahl von in ein einzelnes 3D-Bild in dem 3D-Anzeigesignal zusammenzufassende Videoframes in einer Einheit enthalten, wobei das Multiplexschema aus der Gruppe aus Multiplexschemen mit zumindest Frame-wechselndem Multiplexing ausgewählt wird, wobei das Frame-wechselnde Multiplexing die Anzahl von Frames anzeigt, die innerhalb der Videodatenperiode sequentiell angeordnet sind; und
- die Anzahl von Frames, die zusammenzufassen und als ein 3D-Bild für mindestens ein Multiplexschema darzustellen sind, mindestens einen Frame mit Grafikinformationen umfasst, und
- das Erzeugen der Anzeigesteuersignale in Abhängigkeit der 3D-Übertragungsinformationen durchgeführt wird.

2. Verfahren nach Anspruch 1, wobei in den Informationen über das Multiplexschema die Gruppe von Multiplexschemen weiterhin mindestens eines der folgenden umfasst:
- feldwechselndes Multiplexing;
- zeilenwechselndes Multiplexing;
- Side-by-Side-Frame-Multiplexing, wobei das Side-by-Side-Frame-Multiplexing die Anzahl von Frames anzeigt, die innerhalb der Videodatenperiode nebeneinander angeordnet sind;
- 2D und Tiefen-Frame-Multiplexing;
- 2D, Tiefen-, Grafik- und Grafik-Tiefen-Frame-Multiplexing.

3. Verfahren nach Anspruch 1, wobei die 3D-Übertragungsinformationen Informationen über eine Pixelgröße und eine Frequenzrate für Frames enthalten.

4. Verfahren nach Anspruch 3, wobei die 3D-Übertragungsinformationen in dem AVI-Infoframe enthalten sind.

5. Verfahren nach Anspruch 3, wobei die 3D-Übertragungsinformationen in einem anbieterspezifischen Infoframe enthalten sind.

6. 3D-Quellgerät zur Übertragung von dreidimensionalen [3D] Bilddaten zu einer 3D-Anzeigeeinrichtung, wobei das Gerät umfasst:
- Erzeugungsmittel (52) zur Erzeugung von Quellbilddaten, um ein 3D-Anzeigesignal (56) zu erzeugen, wobei das 3D-Anzeigesignal eine Sequenz von Frames umfasst, welche die 3D-Bilddaten gemäß einem 3D-Videoübertragungsformat bilden, wobei das 3D-Videoformat eine Videodatenperiode, in der Pixel des aktiven Videos übertragen werden, sowie eine Dateninselperiode umfasst, in der Audio- und Hilfsdaten unter Verwendung einer Reihe von Paketen übertragen werden, wobei die Pakete ein Infoframe-Paket enthalten, wobei die Videodatenperiode und Dateninselperiode HDMI-konform sind, sowie
- Ausgangsschnittstellenmittel (12) zur Ausgabe des 3D-Anzeigesignals, wobei jeder Frame eine Datenstruktur zur Darstellung einer Sequenz von digitalen Bildpixeldaten aufweist und jeder Frame eine partielle 3D-Datenstruktur darstellt,
wobei die Sequenz von Frames Einheiten umfasst, wobei die Einheit eine Periode von einem Vertikalsynchronisierungssignal bis zu dem nächsten Vertikalsynchronisierungssignal ist, wobei jede Einheit einer entsprechend einem Multiplexschema angeordneten Anzahl von Frames entspricht, wobei die Anzahl von Frames Videoinformationen umfasst, die zusammengefasst und als ein 3D-Bild dargestellt werden sollen;
wobei die Ausgangsschnittstellenmittel so eingerichtet sind, dass sie 3D-Übertragungsinformationen in dem Infoframe-Paket übertragen, wobei die 3D-Übertragungsinformationen zumindest Informationen über das Multiplexschema umfassen, die die Anzahl von in ein einzelnes 3D-Bild in dem 3D-Anzeigesignal zusammenzufassende Videoframes in einer Einheit enthalten, wobei das Multiplexschema aus der Gruppe aus Multiplexschemen mit zumindest Frame-wechselndem Multiplexing ausgewählt wird, wobei das Frame-wechselnde Multiplexing die Anzahl von Frames anzeigt, die innerhalb der Videodatenperiode sequentiell angeordnet sind; und
- die Anzahl von Frames, die zusammenzufassen und als ein 3D-Bild für mindestens ein Multiplexschema darzustellen sind, mindestens einen Frame mit Grafikinformationen umfasst,
um an der Anzeigeeinrichtung Anzeigesteuersignale in Abhängigkeit der 3D-Übertragungsinformationen zu erzeugen.

7. 3D-Quellgerät nach Anspruch 6, wobei die Ausgangsschnittstellenmittel so eingerichtet sind, dass sie weitere Informationen über das Multiplexschema durch die Gruppe von Multiplexschemen vorsieht, die weiterhin mindestens eines der folgenden uimfasst:
- feldwechselndes Multiplexing;
- zeilenwechselndes Multiplexing;
- Side-by-Side-Frame-Multiplexing, wobei das Side-by-Side-Frame-Multiplexing die Anzahl von Frames anzeigt, die innerhalb der Videodatenperiode nebeneinander angeordnet sind;
- 2D und Tiefen-Frame-Multiplexing;
- 2D, Tiefen-, Grafik- und Grafik-Tiefen-Frame-Multiplexing.

8. 3D-Anzeigeeinrichtung, umfassend:
- ein 3D-Display (17) zur Darstellung von 3D-Bilddaten,
- Eingangsschnittstellenmittel (14) zum Empfang eines 3D-Anzeigesignals, wobei das 3D-Anzeigesignal Frames umfasst, welche die 3D-Bilddaten gemäß einem 3D-Videoübertragungsformat bilden, wobei das 3D-Videoformat eine Videodatenperiode, in der Pixel des aktiven Videos übertragen werden, sowie eine Dateninselperiode umfasst, in der Audio- und Hilfsdaten unter Verwendung einer Reihe von Paketen übertragen werden, wobei die Pakete ein Infoframe-Paket enthalten, wobei die Videodatenperiode und Dateninselperiode HDMI-konform sind, sowie
- Verarbeitungsmittel (18), um Anzeigesteuersignale zur Wiedergabe der 3D-Bilddaten auf dem 3D-Display zu erzeugen,
- wobei jeder Frame eine Datenstruktur zur Darstellung einer Sequenz digitaler Bildpixeldaten aufweist und jeder Frame eine partielle 3D-Datenstruktur darstellt, und
die Sequenz von Frames Einheiten umfasst, wobei die Einheit eine Periode von einem Vertikalsynchronisierungssignal bis zu dem nächsten Vertikalsynchronisierungssignal ist, wobei jede Einheit einer entsprechend einem Multiplexschema angeordneten Anzahl von Frames entspricht, wobei die Anzahl von Frames Videoinformationen umfasst, die zusammengefasst und als ein 3D-Bild dargestellt werden sollen;
- wobei 3D-Übertragungsinformationen in dem Infoframe-Paket zumindest Informationen über das Multiplexschema umfassen, die die Anzahl von in ein einzelnes 3D-Bild in dem 3D-Anzeigesignal zusammenzufassenden Videoframes in einer Einheit enthalten, wobei das Multiplexschema aus der Gruppe aus Multiplexschemen mit zumindest Frame-wechselndem Multiplexing ausgewählt wird, wobei das Frame-wechselnde Multiplexing die Anzahl von Frames anzeigt, die innerhalb der Videodatenperiode sequentiell angeordnet sind; und
die Anzahl von Frames, die zusammenzufassen und als ein 3D-Bild für mindestens ein Multiplexschema darzustellen sind, mindestens einen Frame mit Grafikinformationen umfasst, und
- die Verarbeitungsmittel (18) so eingerichtet sind, dass sie die Anzeigesteuersignale in Abhängigkeit der 3D-Übertragungsinformationen erzeugen.

9. 3D-Anzeigeeinrichtung nach Anspruch 8, wobei die Verarbeitungsmittel (18) so eingerichtet sind, dass sie die Anzeigesteuersignale in Abhängigkeit weiterer Informationen über das Multiplexschema durch die Gruppe von Multiplexschemen erzeugt, die weiterhin mindestens eines der folgenden uimfasst:
- feldwechselndes Multiplexing;
- zeilenwechselndes Multiplexing;
- Side-by-Side-Frame-Multiplexing, wobei das Side-by-Side-Frame-Multiplexing die Anzahl von Frames anzeigt, die innerhalb der Videodatenperiode nebeneinander angeordnet sind;
- 2D und Tiefen-Frame-Multiplexing;
- 2D, Tiefen-, Grafik- und Grafik-Tiefen-Frame-Multiplexing.

10. 3D-Anzeigeeinrichtung nach Anspruch 9, wobei die 3D-Übertragungsinformationen in dem AVI-Infoframe enthalten sind.

11. 3D-Anzeigeeinrichtung nach Anspruch 9, wobei die 3D-Übertragungsinformationen in einem anbieterspezifischen Infoframe enthalten sind.

12. 3D-Anzeigesignal zur Übertragung von dreidimensionalen [3D] Bilddaten zu einer 3D-Anzeigeeinrichtung, wobei das 3D-Anzeigesignal eine Sequenz von Frames umfasst, welche die 3D-Bilddaten gemäß einem 3D-Videoübertragungsformat bilden, wobei das 3D-Videoformat eine Videodatenperiode, in der Pixel des aktiven Videos übertragen werden, sowie eine Dateninselperiode umfasst, in der Audio- und Hilfsdaten unter Verwendung einer Reihe von Paketen übertragen werden, wobei die Pakete ein Infoframe-Paket enthalten, wobei die Videodatenperiode und Dateninselperiode HDMI-konform sind,
wobei die Sequenz von Frames Einheiten umfasst, wobei die Einheit eine Periode von einem Vertikalsynchronisierungssignal bis zu dem nächsten Vertikalsynchronisierungssignal ist, wobei jede Einheit einer entsprechend einem Multiplexschema angeordneten Anzahl von Frames entspricht, wobei die Anzahl von Frames Videoinformationen umfasst, die zusammengefasst und als ein 3D-Bild und dargestellt werden sollen;
wobei
- jeder Frame eine Datenstruktur zur Darstellung einer Sequenz digitaler Bildpixeldaten aufweist und jeder Frame eine partielle 3D-Datenstruktur darstellt, wobei das 3D-Anzeigesignal umfasst:
- 3D-Übertragungsinformationen in dem Infoframe-Paket, wobei die 3D-Übertragungsinformationen zumindest Informationen über das Multiplexschema umfassen, die die Anzahl von in ein einzelnes 3D-Bild in dem 3D-Anzeigesignal zusammenzufassende Videoframes in einer Einheit enthalten, wobei das Multiplexschema aus der Gruppe aus Multiplexschemen mit zumindest Frame-wechselndem Multiplexing ausgewählt wird, wobei das Frame-wechselnde Multiplexing die Anzahl von Frames anzeigt, die innerhalb der Videodatenperiode sequentiell angeordnet sind; und
- die Anzahl von Frames, die zusammenzufassen und als ein 3D-Bild für mindestens ein Multiplexschema darzustellen sind, mindestens einen Frame mit Grafikinformationen umfasst;
um an der Anzeigeeinrichtung Anzeigesteuersignale in Abhängigkeit der 3D-Übertragungsinformationen zu erzeugen.

13. 3D-Anzeigesignal nach Anspruch 12, wobei in den Informationen über das Multiplexschema die Gruppe von Multiplexschemen weiterhin mindestens eines der folgenden umfasst:
- feldwechselndes Multiplexing;
- zeilenwechselndes Multiplexing;
- Side-by-Side-Frame-Multiplexing, wobei das Side-by-Side-Frame-Multiplexing die Anzahl von Frames anzeigt, die innerhalb der Videodatenperiode nebeneinander angeordnet sind;
- 2D und Tiefen-Frame-Multiplexing;
- 2D, Tiefen-, Grafik- und Grafik-Tiefen-Frame-Multiplexing.

## Revendications

1. Procédé de transfert de données d'image tridimensionnelle [3D], le procédé comprenant, dans un dispositif source 3D,
- le traitement de données d'image source pour générer un signal d'affichage 3D, le signal d'affichage 3D comprenant une séquence de trames constituant les données d'image 3D selon un format de transfert vidéo 3D, le format vidéo 3D comprenant une période de données vidéo durant laquelle des pixels de vidéo active sont transmis et une période d'îlot de données durant laquelle des données audio et auxiliaires sont transmises en utilisant une série de paquets, les paquets incluant un paquet de trame d'info, lesquelles période de données vidéo et période d'îlot de données sont selon HDMI, et
- l'envoi du signal d'affichage 3D ;
et, dans un dispositif d'affichage 3D,
- la réception du signal d'affichage 3D, et
- le traitement du signal d'affichage 3D pour générer des signaux de commande d'affichage pour rendre les données d'image 3D sur un affichage 3D,
- la séquence de trames comprenant des unités, l'unité étant une période d'un signal de synchronisation verticale au signal de synchronisation verticale suivant, chaque unité correspondant à un nombre de trames agencées selon un plan de multiplexage, le nombre de trames comprenant des informations vidéo prévues pour être composées et affichées sous forme d'image 3D ;
- chaque trame dans l'unité possédant une structure de données pour représenter une séquence de données de pixel d'image numérique, et chaque trame représentant une structure 3D partielle de données, et dans lequel le procédé comprend, dans le dispositif source 3D,
- l'inclusion d'informations de transfert 3D dans le paquet de trame d'info, les informations de transfert 3D comprenant au moins des informations concernant le plan de multiplexage y compris le nombre de trames vidéo dans une unité destinées à être composées en une seule image 3D dans le signal d'affichage 3D, le plan de multiplexage étant sélectionné parmi un groupe de plans de multiplexage comprenant au moins le multiplexage à alternance de trames, l'alternance de trames indiquant ledit nombre de trames séquentiellement agencées au sein de ladite période de données vidéo ; et
- le nombre de trames prévues pour être composées et affichées sous forme d'image 3D pour au moins un plan de multiplexage comprenant au moins une trame d'informations graphiques ; et
- ladite génération des signaux de commande d'affichage est réalisée en fonction des informations de transfert 3D.

2. Procédé selon la revendication 1, dans lequel, dans les informations concernant le plan de multiplexage, le groupe de plans de multiplexage comprend en outre au moins un parmi :
- multiplexage à alternance de champs ;
- multiplexage à alternance de lignes ;
- multiplexage à trames côte à côte, le multiplexage à trames côte à côte indiquant ledit nombre de trames agencées côte à côte au sein de ladite période de données vidéo ;
- multiplexage 2D et à trames de profondeur ;
- multiplexage 2D, en profondeur, graphique, et à trames de profondeur graphique.

3. Procédé selon la revendication 1, dans lequel les informations de transfert 3D incluent des informations concernant une taille de pixel et un taux de fréquence pour des trames.

4. Procédé selon la revendication 3, dans lequel les informations de transfert 3D sont incluses dans la trame d'informations AVI.

5. Procédé selon la revendication 3, dans lequel les informations de transfert 3D sont incluses dans une trame d'informations spécifique au vendeur.

6. Dispositif source 3D pour le transfert de données image tridimensionnelle [3D] à un dispositif d'affichage 3D, le dispositif comprenant :
- des moyens de génération (52) pour traiter des données d'image source pour générer un signal d'affichage 3D (56), le signal d'affichage 3D comprenant une séquence de trames constituant les données d'image 3D selon un format de transfert vidéo 3D, le format vidéo 3D comprenant une période de données vidéo durant laquelle des pixels de vidéo active sont transmis et une période d'îlot de données durant laquelle des données audio et auxiliaires sont transmises en utilisant une série de paquets, les paquets incluant un paquet de trame d'info, lesquelles période de données vidéo et période d'îlot de données sont selon HDMI, et
- des moyens d'interface de sortie (12) pour produire en sortie le signal d'affichage 3D, chaque trame possédant une structure de données pour représenter une séquence de données de pixel d'image numérique, et chaque trame représentant une structure 3D partielle de données,
- la séquence de trames comprenant des unités, l'unité étant une période d'un signal de synchronisation verticale au signal de synchronisation verticale suivant, chaque unité correspondant à un nombre de trames agencées selon un plan de multiplexage, le nombre de trames comprenant des informations vidéo prévues pour être composées et affichées sous forme d'image 3D ;
dans lequel les moyens d'interface de sortie sont adaptés pour transmettre des informations de transfert 3D dans le paquet de trame d'info, les informations de transfert 3D comprenant au moins des informations concernant le plan de multiplexage y compris le nombre de trames vidéo dans une unité destinées à être composées en une seule image 3D dans le signal d'affichage 3D, le plan de multiplexage étant sélectionné parmi un groupe de plans de multiplexage comprenant au moins le multiplexage à alternance de trames, l'alternance de trames indiquant ledit nombre de trames séquentiellement agencées au sein de ladite période de données vidéo ; et
le nombre de trames prévues pour être composées et affichées sous forme d'image 3D pour au moins un plan de multiplexage comprend au moins une trame d'informations graphiques ;
pour, dans le dispositif d'affichage, générer des signaux de commande d'affichage en fonction des informations de transfert 3D.

7. Dispositif source 3D selon la revendication 6, dans lequel les moyens d'interface de sortie sont adaptés pour fournir des informations supplémentaires concernant le plan de multiplexage par le groupe de plans de multiplexage comprenant en outre au moins un parmi :
- multiplexage à alternance de champs ;
- multiplexage à alternance de lignes ;
- multiplexage à trames côte à côte, le multiplexage à trames côte à côte indiquant ledit nombre de trames agencées côte à côte au sein de ladite période de données vidéo ;
- multiplexage 2D et à trames de profondeur ;
- multiplexage 2D, en profondeur, graphique, et à trames de profondeur graphique.

8. Dispositif d'affichage 3D, comprenant :
- un affichage 3D (17) pour afficher des données d'image 3D,
- des moyens d'interface d'entrée (14) pour recevoir un signal d'affichage 3D, le signal d'affichage 3D comprenant des trames constituant les données d'image 3D selon un format de transfert vidéo 3D, le format vidéo 3D comprenant une période de données vidéo durant laquelle des pixels de vidéo active sont transmis et une période d'îlot de données durant laquelle des données audio et auxiliaires sont transmises en utilisant une série de paquets, les paquets incluant un paquet de trame d'info, lesquelles période de données vidéo et période d'îlot de données sont selon HDMI, et
- des moyens de traitement (18) pour générer des signaux de commande d'affichage pour rendre les données d'image 3D sur l'affichage 3D,
- chaque trame possédant une structure de données pour représenter une séquence de données de pixel d'image numérique, et chaque trame représentant une structure 3D partielle de données, et
la séquence de trames comprenant des unités, l'unité étant une période d'un signal de synchronisation verticale au signal de synchronisation verticale suivant, chaque unité correspondant à un nombre de trames agencées selon un plan de multiplexage, le nombre de trames comprenant des informations vidéo prévues pour être composées et affichées sous forme d'image 3D ;
- dans lequel des informations de transfert 3D dans le paquet de trame d'info comprennent au moins des informations concernant le plan de multiplexage y compris le nombre de trames vidéo dans une unité destinées à être composées en une seule image 3D dans le signal d'affichage 3D , le plan de multiplexage étant sélectionné parmi un groupe de plans de multiplexage comprenant au moins le multiplexage à alternance de trames, l'alternance de trames indiquant ledit nombre de trames séquentiellement agencées au sein de ladite période de données vidéo ; et
le nombre de trames prévues pour être composées et affichées sous forme d'image 3D pour au moins un plan de multiplexage comprend au moins une trame de informations graphiques ; et
- les moyens de traitement (18) sont agencés pour générer les signaux de commande d'affichage en fonction des informations de transfert 3D.

9. Dispositif d'affichage 3D selon la revendication 8, dans lequel les moyens de traitement (18) sont agencés pour générer les signaux de commande d'affichage en fonction d'informations supplémentaires concernant le plan de multiplexage par le groupe de plans de multiplexage comprenant en outre au moins un parmi :
- multiplexage à alternance de champs ;
- multiplexage à alternance de lignes ;
- multiplexage à trames côte à côte, le multiplexage à trames côte à côte indiquant ledit nombre de trames agencées côte à côte au sein de ladite période de données vidéo ;
- multiplexage 2D et à trames de profondeur ;
- multiplexage 2D, en profondeur, graphique, et à trames de profondeur graphique.

10. Dispositif d'affichage 3D selon la revendication 9, dans lequel les informations de transfert 3D sont incluses dans la trame d'informations AVI.

11. Dispositif d'affichage 3D selon la revendication 9, dans lequel les informations de transfert 3D sont incluses dans une trame d'informations spécifique au vendeur.

12. Signal d'affichage 3D pour le transfert de données image tridimensionnelle [3D] à un dispositif d'affichage 3D, le signal d'affichage 3D comprenant une séquence de trames constituant les données d'image 3D selon un format de transfert vidéo 3D, le format vidéo 3D comprenant une période de données vidéo durant laquelle des pixels de vidéo active sont transmis et une période d'îlot de données durant laquelle des données audio et auxiliaires sont transmises en utilisant une série de paquets, les paquets incluant un paquet de trame d'info, lesquelles période de données vidéo et période d'îlot de données sont selon HDMI,
la séquence de trames comprenant des unités, l'unité étant une période d'un signal de synchronisation verticale au signal de synchronisation verticale suivant, chaque unité correspondant à un nombre de trames agencées selon un plan de multiplexage, le nombre de trames comprenant des informations vidéo prévues pour être composées et affichées sous forme d'image 3D ;
dans lequel
- chaque trame comporte une structure de données pour représenter une séquence de données de pixel d'image numérique, et chaque trame représente une structure 3D partielle de données, dans lequel le signal d'affichage 3D comprend
- des informations de transfert 3D dans le paquet de trame d'info, les informations de transfert 3D comprenant au moins des informations concernant le plan de multiplexage y compris le nombre de trames vidéo dans une unité destinées à être composées en une seule image 3D dans le signal d'affichage 3D, le plan de multiplexage étant sélectionné parmi un groupe de plans de multiplexage comprenant au moins le multiplexage à alternance de trames, l'alternance de trames indiquant ledit nombre de trames séquentiellement agencées au sein de ladite période de données vidéo ; et
le nombre de trames prévues pour être composées et affichées sous forme d'image 3D pour au moins un plan de multiplexage comprend au moins une trame d'informations graphiques ;
pour, dans le dispositif d'affichage, générer des signaux de commande d'affichage en fonction des informations de transfert 3D.

13. Signal d'affichage 3D selon la revendication 12, dans lequel, dans les informations concernant le plan de multiplexage, le groupe de plans de multiplexage comprend en outre au moins un parmi :
- multiplexage à alternance de champs ;
- multiplexage à alternance de lignes ;
- multiplexage à trames côte à côte, le multiplexage à trames côte à côte indiquant ledit nombre de trames agencées côte à côte au sein de ladite période de données vidéo ;
- multiplexage 2D et à trames de profondeur ;
- multiplexage 2D, en profondeur, graphique, et à trames de profondeur graphique.
